**Europäisches Patentamt**

**European Patent Office**

**Office européen des brevets**

(11) Veröffentlichungsnummer: **0 211 177 B1**

(12) **EUROPÄISCHE PATENTSCHRIFT**

(45) Veröffentlichungstag der Patentschrift:
22.03.89

(51) Int. Cl.⁴: **B 01 D 46/12**, B 60 H 3/06

(21) Anmeldenummer: **86107557.0**

(22) Anmeldetag: **04.06.86**

(54) **Plattenförmiger Filtereinsatz.**

(30) Priorität: **09.07.85 DE 3524431**

(43) Veröffentlichungstag der Anmeldung:
**25.02.87 Patentblatt 87/9**

(45) Bekanntmachung des Hinweises auf die Patenterteilung:
**22.03.89 Patentblatt 89/12**

(84) Benannte Vertragsstaaten:
**DE FR GB IT**

(56) Entgegenhaltungen:
**DE-A- 2 843 012**
**GB-A- 1 053 285**
**NL-A- 7 903 187**
**US-A- 3 941 034**

(73) Patentinhaber: **KNECHT Filterwerke GmbH,
Haldenstrasse 48, D-7000 Stuttgart 50 (DE)**

(72) Erfinder: **Baumann, Peter, Spitalackerweg 4/A,
D-7000 Stuttgart 80 (DE)**
Erfinder: **Kümmerle, Manfred, Südstrasse 29,
D-7105 Leingarten (DE)**

(74) Vertreter: **Pfusch, Volker, Dipl.-Ing., MAHLE GMBH
Patentabteilung Pragstrasse 26-46 Postfach 50 07 69,
D-7000 Stuttgart 50 (DE)**

**Beschreibung**

Die Erfindung betrifft einen plattenförmigen Filtereinsatz nach dem Oberbegriff des Anspruchs 1.

Derartige Filtereinsätze mit einem Filterelement aus einer zick-zack-förmig gefalteten Filterstoffbahn sind für Ansaugluftfilter von Verbrennungsmotoren aus der DE-C-2 301 635 bekannt. Bei jenen bekannten Filtereinsätzen wird die Randeinfassung in einem zu diesem Zweck besonders geformten Werkzeug, in das die Filterstoffbahn eingelegt wird, durch Aufschäumen eines Kunststoffes erzeugt.

Aus der DE-A-3 228 156 ist zur Vermeidung von Schadstoffkonzentrationen in Innenräumen, von z.B. Fahrzeugen, ein Luftreinigungsgerät bekannt, das als Filter einen Flächenfilter mit einer luftdurchlässigen Trägerschicht aus Schaumkunststoff und einem daran fixierten Adsorbens aus Aktivkohle vorsieht.

Die DE-A-2 819 702 beinhaltet einen Filter für Autokabinen, bei dem eine filterartige Masse aus körnigem Material mit einer kissenförmigen, strumpfartigen Ummantelung versehen ist, um den Filter beliebig verformbar und dichtend in die unterschiedlichsten Zuführungsleitungen für die Frischluft der Autokabine einsetzen zu können.

Aus dem DE-GM 8 232 592 ist ein Filter bekannt, der geruchsadsorbierende Stoffe enthält und aus mehreren in Strömungsrichtung hintereinander angeordneten Vliesen besteht, wobei die Vliese untereinander durch Kleben miteinander verbunden sind und von einem U-förmigen Rahmen aus Kunststoff umfaßt werden. Als Adosrptionsmittel soll z.B. Aktivkohle in das Vlies eingelagert sein.

Das Einbringen von Aktivkohle als Adosrptionsmittel ist bei Filterelementen, die aus mehreren hintereinander durchströmten Schichten bestehen, an sich bekannt — siehe hierzu beispielsweise DE-B-2 804 154 und DE-A-2 927 287.

Ausgehend von einem derartigen Stand der Technik liegt der Erfindung die Aufgabe zugrunde, die Herstellung des Filtereinsatzes, der aus einem aus mehreren aufeinanderliegenden Schichten bestehenden Filterelement und einem U-förmigen Rahmen besteht, auf einfache Weise zu erreichen und eine sichere Verbindung der einzelnen Schichten zu gewährleisten.

Gelöst wird diese Aufgabe durch den konstruktiv einfachen Aufbau des plattenförmigen Filtereinsatzes nach den kennzeichnenden Merkmalen des Anspruchs 1.

Vorteilhafte Ausführungen nach der Erfindung sind in den Unteranspüchen enthalten.

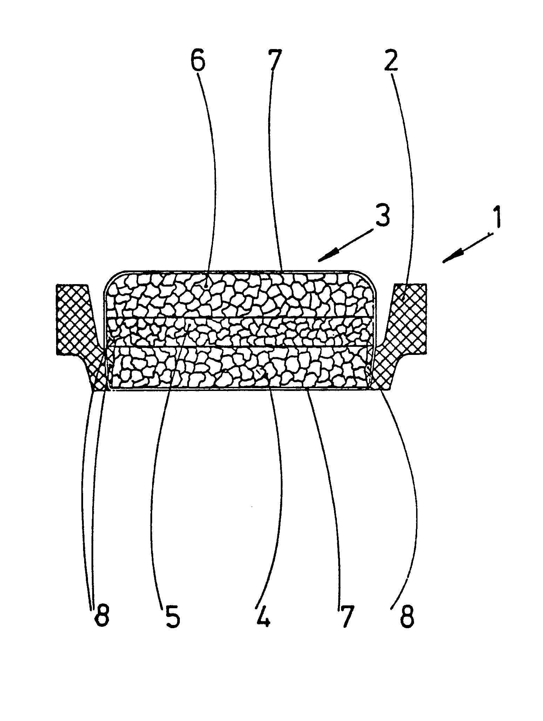

Ein Ausführungsbeispiel ist in der Zeichnung dargestellt, die den Aufbau des Filtereinsatzes im Schnitt ausschnittsweise darstellt.

Ein plattenförmiger Filtereinsatz 1 besteht aus einem U-förmigen Rahmen 2 und einem Filterelement 3. Das Filterelement 3 setzt sich aus drei porösen, plattenförmigen, aufeinanderliegenden Schichten 4, 5, 6 aus PU-Schaum mit unterschiedlicher Porosität zur Aufnahme von unterschiedlichen Aktivkohle-Auflagen zusammen, wobei die als Adsorptionsmittel verwendete Aktivkohle als sich an dem Schichtträgermaterial anlagernde feine Partikel in die porösen Schichten 4, 5, 6 eingebracht ist.

Die drei plattenförmigen mit Aktivkohle beschichteten Schichten 4, 5, 6 unterschiedlicher Dichte aus PU-Schaum werden vor dem Anbringen des U-förmigen Rahmens 2 mit einer endlosen schlauchartigen Kunststoffgewebebahn 7 überzogen, um eine stabile Lage und gegenseitige Fixierung zu erhalten.

Die schlauchartige Gewebebahn 7 weist eine Porosität auf, die gewährleistet, daß die in die Schichten 4, 5, 6 eingebrachten Aktivkohle-Partikel zurückgehalten werden, so daß ein Austreten von Aktivkohle bei der Lagerung, dem Transport oder der Verarbeitung des Filterelements 3 aus dem Filtereinsatz 1 vermieden wird.

Bei der Herstellung des Filtereinsatzes 1 wird das aus den mit der Aktivkohle versehenen Schichten 4, 5, 6 und der diese Schichten umfassenden Gewebebahn 7 bestehende Filterelement 3 zur Bildung des U-förmigen Rahmens 2 in ein zu diesem Zweck besonders geformtes Werkzeug eingelegt, flüssiger aufschäumbarer Kunststoff, z.B. Polyurethan, hinzugegeben und dieser zum Aufschäumen gebracht. Dabei dringt der Kunststoff an den Stellen, an denen es das besonders geformte Werkzeug zulässt, durch die Gewebebahn 7 hindurch in den daran angrenzenden äußeren Bereich 8 der Schicht 4, 5 ein, wodurch eine hinterschnittartige, mechanische Verankerung erreicht wird. Die so gebildete Randeinfassung muss nicht alle Schichten 4, 5, 6 ergreifen, da die Fixierung der Schichten 4, 5, 6 ja durch die Gewebebahn 7 gewährleistet ist und es somit ausreicht, wenn die Randeinfassung die Gewebebahn 7 und den äußeren Bereich einer Schicht umfaßt.

Mit einem derartigen Filtereinsatz ist von seinem Aufbau her einerseits die Austauschbarkeit mit einem zur Staubabscheidung dienenden Fahrzeugkabinenluftfilter bekannter Bauart und andererseits die Aufnahme von bei besonderen Betriebsbedingungen anfallenden Schadstoffen, wie beispielsweise bei der Ausbringung von Spritzmitteln, im Schleppereinsatz gewährleistet.

**Patentansprüche**

1. Plattenförmiger Filtereinsatz (1), insbesondere für einen Fahrzeugkabinenluftfilter, bestehend aus einem Filterelement (3) und einem dieses Filterelement einfassenden U-förmigen Rahmen (2) aus Kunststoff, wobei das Filterelement (3) aus mehreren porösen, plattenförmigen, aufeinanderliegenden Schichten besteht, in die unterschiedliche Adsorptionsmittel eingebracht sind, dadurch gekennzeichnet, daß die an sich lose aufeinanderliegenden Schichten (4, 5, 6) an ihren freien nach außen gewandten Oberflächen von einem flexiblen Bahnenmaterial (7) paketartig umfaßt sind, und der Kunststoff des Rahmen (2) durch das Bahnenmaterial (7) in den daran angrenzenden äußeren Bereich mindestens einer Schicht (4, 5) hindurchdringt, wodurch das Bahnenmaterial mechanisch fest verankert ist.

2. Plattenförmiger Filtereinsatz nach Anspruch 1, dadurch gekennzeichnet, daß als flexibles Bahnenmaterial (7) ein Gewebe verwendet wird.

3. Plattenförmiger Filtereinsatz nach Anspruch 1 oder 2, dadurch gekennzeichnet, daß die Gewebebahn (7) die Schichten (4, 5, 6) als Schlauch umschließt.

4. Plattenförmiger Filtereinsatz nach einem der vorhergehenden Ansprüche, dadurch gekennzeichnet, daß das Bahnenmaterial (7) eine Porosität aufweist, bei der die in die Schichten (4, 5, 6) eingebrachten Adsorptionsmittel-Partikel zurückgehalten werden.

5. Plattenförmiger Filtereinsatz nach einem der vorhergehenden Ansprüche, dadurch gekennzeichnet, daß als Adsorptionsmittel feine Partikel aus Aktivkohle verwendet werden.

## Claims

1. A plate-shaped filter insert (1), in particular for a vehicle cabin air filter, consisting of a filter element (3) and a U-shaped frame (2) of plastics material framing this filter element, wherein the filter element (3) consists of several porous, plate-shaped, superimposed layers into which various adsorption agents are introduced, characterised in that the layers (4, 5, 6) which are superimposed loosely as such are surrounded in the manner of a package at their free, outwardly turned surfaces by a flexible strip of material (7), and the plastics material of the frame (2) penetrates through the strip of material (7) into the adjacent outer region of at least one layer (4, 5) so that the strip of material is firmly secured in a mechanical manner.

2. A plate-shaped filter insert according to claim 1, characterised in that a woven fabric is used as flexible strip of material (7).

3. A plate-shaped filter insert according to claim 1 or 2, characterised in that the webbing (7) surrounds the layers (4, 5, 6) as a tube.

4. A plate-shaped filter insert according to one of the preceding claims, characterised in that the strip of material (7) has a porosity with which the particles of adsorption agent introduced into the layers (4, 5, 6) are retained.

5. A plate-shaped filter insert according to one of the preceding claims, characterised in that fine particles of activated carbon are used as adsorption agent.

## Revendications

1. Garniture filtrante (1) en forme de plaque, notamment pour filtre à air d'habitacle de véhicule, consistant en un élément filtrant (3) et un cadre (2) en U en matière plastique, qui entoure cet élément filtrant (3), celui-ci étant composé de plusieurs couches poreuses en forme de plaques, superposées, dans lesquelles divers agents adsorbants sont introduits, garniture caractérisée en ce que les couches (4, 5, 6) superposées librement sont entourées et enveloppées à la façon d'un paquet, sur leur surface libre tournée vers l'extérieur, par une bande (7) de matière flexible et en ce que la matière plastique du cadre (2) pénètre, à travers cette bande (7) dans la partie extérieure adjacente d'au moins l'une des couches (4, 5), ce qui ancre mécaniquement la matière en bande.

2. Garniture filtrante en forme de plaque selon la revendication 1, caractérisée en ce que la bande (7) de matière flexible que l'on utilise est en tissu.

3. Garniture filtrante en forme de plaque selon la revendication 1 ou 2, caractérisée en ce que la bande (7) de tissu entoure les couches (4, 5, 6) à la façon d'une gaine.

4. Garniture filtrante en forme de plaque selon l'une des revendications précédentes, caractérisée en ce que la matière en bande (7) a une porosité permettant de retenir les particules d'agent adsorbant introduites dans les couches (4, 5, 6).

5. Garniture filtrante en forme de plaque selon l'une des revendications précédentes, caractérisée en ce que l'agent adsorbant utilisé est constitué de fines particules de charbon actif.